# EUROPEAN PATENT APPLICATION

(11) **EP 4 810 267 A1**
(43) Date of publication of application: **23.09.2026**
(21) Application number: 26160072.0
(22) Date of filing: 23.02.2026
(51) Int. Cl.: B60C 1/00, C08L 7/00

(54) **RUBBER COMPOSITION AND METHOD OF MIXING A RUBBER COMPOSITION**

(30) Priority: 19.03.2025 US 202519084059
(71) Applicant: The Goodyear Tire & Rubber Company, Akron, OH 44316 (US)
(72) Inventor: TAHON, Julia Martine Francoise Claudine, L-7596 Reckange (LU); MOUGEL, Celia Pauline Elodie, L-7750 Colmar-Berg (LU); SANDSTROM, Paul Harry, Cuyahoga Falls, 44223 (US)
(74) Representative: Leslie, Edward

(57) **Abstract**

A composition is disclosed comprising: an elastomer, the elastomer comprising from 25 phr to 75 phr of a natural rubber and from 25 phr to 75 phr of a synthetic elastomer; an accelerator, comprising from 0.1 phr to 5 phr of a first accelerator and 0.1 phr to 5 phr a second accelerator, the second accelerator being different from the first accelerator; and from 0.1 phr to 10 phr of a hydrogenated gum rosin. The hydrogenated gum rosin has an acid value of 140 mg KOH/g to 200 mg KOH/g and a softening point as determined in accordance with ASTM E28 in a range of from 70 °C to 125 °C. Also disclosed is an article such as a tire or a tire component comprising such a composition and a method of mixing such a rubber composition.

## Description

### BACKGROUND

The demand for improved tire performance has resulted in the development and evaluation of new materials that have desirable properties. Improving tire properties such as ozone resistance while maintaining the balance in tradeoffs can be challenging. For example, tires with good ozone resistance, which at least in part can be attributed to wax additives migrating to the surface of a tire sidewall and/or chafer, can also exhibit visible wax blooming on the surface of the tire. Visible blooming on a tire surface can be viewed as a negative for both sellers, purchasers, and/or users of tires. There is a need for rubber formulations that exhibit good properties, such as ozone resistance, while also maintaining visual appeal in the products produced from them. These needs and other needs are satisfied by the present invention.

### SUMMARY OF THE INVENTION

The invention relates to a composition in accordance with claim 1, to an article in accordance with claim 9 and to a method in accordance with claim 13.

Dependent claims refer to preferred embodiments of the invention.

The invention, in one aspect, relates to a composition comprising: an elastomer, comprising from 25 phr to 75 phr of a natural rubber and from 25 phr to 75 phr of a synthetic elastomer; an accelerator, comprising from 0.1 phr to 5 phr of a first accelerator and 0.1 phr to 5 phr a second accelerator, the second accelerator being different from the first accelerator; and 0.1 phr to 10 phr of a hydrogenated gum rosin. In one aspect, the hydrogenated gum rosin has an acid value of 140 mg KOH/g to 200 mg KOH/g. In another aspect, the hydrogenated gum rosin has a softening point of 70 °C to 125 °C. Also disclosed herein are articles, such as tires and/or components of tires, comprising the disclosed compositions.

Also disclosed herein is a method for mixing rubber, comprising combining together an elastomer and 0.1 phr to 10 phr of a hydrogenated gum rosin, thereby forming a first or initial mixture; mixing the first mixture at a temperature of 130 °C to 180 °C, thereby forming a first stage mixture; combining together the first stage mixture with 0.1 phr to 5 phr of a first accelerator and 0.1 phr to 5 phr a second accelerator, the second accelerator being different from the first accelerator, thereby forming an intermediate mixture; and mixing the intermediate mixture at a temperature of 90 °C to 110 °C, thereby forming a second stage mixture. In one aspect, the elastomer comprises from 25 phr to 75 phr of a natural rubber and from 25 phr to 75 phr of a synthetic elastomer. In another aspect, the hydrogenated gum rosin has an acid value of 140 mg KOH/g to 200 mg KOH/g. In yet another aspect, the hydrogenated gum rosin has a softening point of 70 °C to 125 °C.

Other aspects and advantages of the present invention will be or become apparent to one with skill in the art upon examination of the following detailed description. All optional and preferred features and modifications of the described aspects are usable in all aspects of the invention taught herein. Furthermore, the individual features of the dependent claims, as well as all optional and preferred features and modifications of the described aspects are combinable and interchangeable with one another.

### BRIEF DESCRIPTION OF THE FIGURES

The present invention can be better understood with reference to the following drawings.
**FIGS. 1A-1G** show representative pictures of sidewall rubber specimens that have undergone dynamic ozone resistance testing.
**FIGS. 2A-2G** show representative pictures of sidewall rubber specimens that have undergone static ozone resistance testing.
**FIGS. 3A-3B** show representative pictures of sidewall rubber specimens that have undergone ozone resistance testing.

### DETAILED DESCRIPTION OF PREFERRED EMBODIMENTS OF THE INVENTION

Prior to describing the various aspects of the present invention, the following definitions are provided and should be used unless otherwise indicated. Additional terms may be defined elsewhere in the present invention.

### A. DEFINITIONS

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used herein, the term "and/or" includes any and all combinations of one or more of the associated listed items. Expressions such as "at least one of," when preceding a list of elements, modify the entire list and do not modify the individual elements of the list.

As used herein, nomenclature for compounds, including organic compounds, can be given using common names, IUPAC, IUBMB, or CAS recommendations for nomenclature.

When one or more stereochemical features are present, Cahn-Ingold-Prelog rules for stereochemistry can be employed to designate stereochemical priority, E/Z specification, and the like. One of skill in the art can readily ascertain the structure of a compound if given a name, either by systemic reduction of the compound structure using naming conventions, or by commercially available software, such as CHEMDRAW^{™} (Cambridgesoft Corporation, U.S.A.).

As used in the specification and the appended claims, the singular forms "a," "an" and "the" include plural referents unless the context clearly dictates otherwise. Thus, for example, reference to "an elastomer," "an accelerator," or "a wax," includes, but is not limited to, two or more such elastomers, accelerators, or waxes, and the like. Reference to "a" chemical compound refers to one or more molecules of the chemical compound rather than being limited to a single molecule of the chemical compound. Furthermore, the one or more molecules may or may not be identical, so long as they fall under the category of the chemical compound. Thus, for example, "a" chemical compound is interpreted to include one or more molecules of the chemical compound, where the molecules may or may not be identical (e.g., different isotopic ratios, enantiomers, and the like).

It should be noted that ratios, concentrations, amounts, and other numerical data can be expressed herein in a range format. It will be further understood that the endpoints of each of the ranges are significant both in relation to the other endpoint, and independently of the other endpoint. It is also understood that there are a number of values disclosed herein, and that each value is also herein disclosed as particular value.

The terms "rubber" and "elastomer" may be used herein interchangeably, unless indicated otherwise.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber/elastomer.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In one aspect, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In one aspect, rubber compositions can be cured in molds in order to form finished articles such as tires.

As used herein, the term "repeat unit" as referenced in the elastomers described herein are derived from monomers used to produce the partially saturated elastomers. For example, polybutadiene has the repeat unit as provided below.

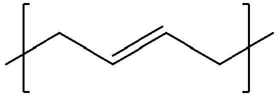

**In** certain aspects, when the elastomer is the polymerization product of two different monomers (e.g., A and B), the repeat unit can be represented by -A-B-.

As used herein, a "residue" of a chemical species refers to the moiety that is the resulting product of the chemical species in a particular reaction scheme or subsequent formulation or chemical product, regardless of whether the moiety is actually obtained from the chemical species. Thus, an isoprene residue in an elastomer refers to one or more - CH₂CH=C(CH₃)CH₂- units in the elastomer, regardless of whether isoprene was used to prepare the elastomer. Similarly, a butadiene residue in an elastomer refers to one or more - CH₂CH=CHCH₂- moieties in the elastomer, regardless of whether the residue is obtained by reacting sebacic acid or an ester thereof to obtain the polyester.

Unless otherwise specified, temperatures referred to herein are based on atmospheric pressure (i.e. one atmosphere).

### B. RUBBER COMPOSITIONS

In one aspect, the invention relates to compositions, such as uncured or cured rubber compositions, comprising an elastomer, an accelerator, and 0.1 phr to 10 phr of a hydrogenated gum rosin. In one aspect, the elastomer comprises from 25 phr to 75 phr of a natural rubber and from 25 phr to 75 phr of a synthetic elastomer. In one aspect, the accelerator comprises from 0.1 phr to 5 phr of a first accelerator and 0.1 phr to 5 phr a second accelerator. In a further preferred aspect, the total amount of accelerators present in the composition can range from 0.5 phr to 5 phr, 0.5 phr to 4 phr, 0.5 phr to 3 phr, 0.5 phr to 2 phr, 1 phr to 5 phr, 1 phr to 4 phr, or 1 phr to 3 phr.

The compositions disclosed herein exhibit good ozone resistance while also exhibiting reduced visible wax blooming on their surface.

The present invention also relates to methods of making the disclosed compositions and to articles, such as tires and/or components of tires, comprising the compositions.

In a preferred aspect, the elastomer can comprise from 25 phr to 75 phr, 30 phr to 75 phr, 35 phr to 75 phr, 40 phr to 75 phr, 25 phr to 70 phr, 25 phr to 65 phr, 25 phr to 60 phr, 30 phr to 70 phr, or 40 phr to 60 phr of natural rubber.

In another preferred aspect, the elastomer can comprise from 25 phr to 75 phr, 30 phr to 75 phr, 35 phr to 75 phr, 40 phr to 75 phr, 25 phr to 70 phr, 25 phr to 65 phr, 25 phr to 60 phr, 30 phr to 70 phr, or 40 phr to 60 phr of a synthetic elastomer.

In a preferred aspect, the total phr of natural rubber and synthetic elastomer present in the composition totals to 100 phr.

The synthetic elastomer can comprise repeat units formed from residues of monomers selected from ethylene, propylene, isobutene, butadiene, isoprene, styrene, and acrylonitrile, and a combination thereof.

In a preferred aspect, the elastomers have a number average molecular weight (Mₙ) between 100,000 Da and 500,000 Da. Mₙ is determined by gel permeation chromatography following ASTM D3536 or equivalent.

In a preferred aspect, the composition comprises from 0.1 phr to 10 phr, 0.1 phr to 8 phr, 0.1 phr to 5 phr, 0.1 phr to 3 phr, 1 phr to 10 phr, 3 phr to 10 phr, 5 phr to 10 phr, or 7 phr to 10 phr, 0.5 phr to 5 phr, or 0.5 phr to 3 phr of a hydrogenated gum rosin.

Gum rosin is a resinous material that can be extracted from pine trees. Gum rosin is composed of a mixture of organic compounds, including acids such as abietic acid, pimaric acid, and derivatives thereof. Raw gum rosin can be refined or processed to produce various derivatives of gum rosin, such as hydrogenation. An example of a hydrogenated gum rosin is white or water-white gum rosin, which can be produced from raw gum rosin by processes such as hydrogenation, disproportionation, and other treatment methods. Hydrogenated gum rosin can be characterized by a variety of physical properties, including acid value and softening points.

The acid value refers to the quantity of a base needed to neutralize acidic groups contained in a sample.

In one aspect, the acid value is the mg of KOH required to neutralize the acidic groups contained in one gram of hydrogenated gum rosin.

In a preferred aspect, the hydrogenated gum rosin has an acid value of from 140 mg KOH/g to 200 mg KOH/g, 150 mg KOH/g to 200 mg KOH/g, 160 mg KOH/g to 200 mg KOH/g, 170 mg KOH/g to 200 mg KOH/g, 140 mg KOH/g to 190 mg KOH/g, 140 mg KOH/g to 180 mg KOH/g, 140 mg KOH/g to 170 mg KOH/g, 150 mg KOH/g to 190 mg KOH/g, or 160 mg KOH/g to 180 mg KOH/g.

In a preferred aspect, the hydrogenated gum resin has a softening point of from 70 °C to 125 °C, 70 °C to 115 °C, 70 °C to 105 °C, 70°C to 100°C, 70°C to 90 °C, 80°C to 125 °C, 90 °C to 125 °C, 100 °C to 125 °C, 80 °C to 115 °C, or 90 °C to 105 °C. The softening point is determined following ASTM E28 or an equivalent method.

In a preferred aspect, the accelerator comprises from 0.1 phr to 5 phr, 0.1 phr to 4 phr, 0.1 phr to 3 phr, or 0.1 phr to 2 phr of a first accelerator.

The first accelerator is preferably selected from a dithiocarbamate compound, a thiuram compound, a guanidine compound, and a combination thereof. In a further preferred aspect, the first accelerator can be selected from zinc diethyl dithiocarbamate; zinc N-dibutyl dithiocarbamate; zinc N-ethyl-N-phenyl dithiocarbamate; zinc dibenzyldithiocarbamate; tetrabenzylthiuram disulfide; diphenylguanidine; 1,3-di-o-tolylguanidine; triphenylguanidine; and a combination thereof. In another preferred aspect, the first accelerator can be selected from a thiuram compound, a guanidine compound, and a combination thereof. In a further preferred aspect, the first accelerator can be selected from tetrabenzylthiuram disulfide, diphenylguanidine, 1,3-di-o-tolylguanidine, triphenylguanidine, and a combination thereof. In another preferred further aspect, the first accelerator can be selected from tetrabenzylthiuram disulfide, diphenylguanidine, and a combination thereof.

In a preferred aspect, the accelerator can comprise from 0.1 phr to 5 phr, 0.1 phr to 4 phr, 0.1 phr to 3 phr, 0.1 phr to 2 phr, or 0.1 phr to 1 phr of a second accelerator.

The second accelerator is preferably selected from the group consisting of an amine, an imine, a sulfenamide, a guanidine, a dithiocarbamate, a thiadiazole, a thiazole, a thiourea, a thiuram, a dithiophosphate, a xanthate, and a combination thereof. In a preferred aspect, the second accelerator is selected from the group consisting of cyclohexylethylamine; hexamethylene tetramine; ethyldiene aniline; butyraldehyde dianiline condensate; N-cyclohexyl-2-benzothiazolesulfenamide; N-tertbutyl-2-benzothiazolesulfenamide; N,N-dicyclohexyl-2-benzothiazolesulfenamide; 2-(2-4'dinitrophenylmercapto)benzothiazole; 1,3-di-o-tolylguanidine; triphenylguanidine; zinc diethyl dithiocarbamate; zinc N-dibutyl dithiocarbamate; zinc N-ethyl-N-phenyl dithiocarbamate; zinc dibenzyldithiocarbamate; N-cyclohexyl-S-(1,3,4-thiadiazol-2-yl)thiohydroxylamine; 2-mercaptobenzothiazole; 2,2'-dithiobenzothiazole; zinc 2-mercaptobenzothiazole; 2-(morpholinothio)benzothiazole; ethylenethiourea; N-N'- diphenylthiourea; tetramethylthiuram disulfide; tetraethylthiuram disulfide; tetramethylthiuram monosulfide; dipentamethylenethiuram tetrasulfide; zinc dithiophosphate; zinc butylxanthate; sodium isopropyl xanthate; and a combination thereof.

In a preferred aspect, the composition further comprises a filler, a wax, an antidegradant, a fatty acid, a processing oil, a cure activator, a curing agent, or a combination thereof.

In a preferred aspect, the composition comprises from 0.5 phr to 150 phr, 0.5 phr to 100 phr, 0.5 phr to 75 phr, 0.5 phr to 50 phr, or 0.5 phr to 25 phr of the filler.

In a preferred aspect, the composition comprises from 1 phr to 10 phr, 1 phr to 5 phr, or 5 phr to 10 phr of the antidegradant.

In a preferred aspect, the composition comprise from 1 phr to 50 phr, 1 phr to 40 phr, 1 phr to 30 phr, or 1 phr to 20 phr of the processing oil.

In a preferred aspect, waxes can be included in amounts of 1 phr to 5 phr.

Examples of preferred waxes include microcrystalline waxes, paraffin waxes, and isoparaffin waxes.

Fatty acids can be included in amounts of 0.5 phr to 3 phr. Examples of fatty acids include stearic acid, palmitic acids, oleic acid, and mixtures thereof.

Activators can be included in amounts of 1 phr to 10 phr or 1 phr to 5 phr. Activators can include, but are not limited to, magnesium oxide, zinc oxide, calcium oxide, and polyethylene glycol.

Curing or vulcanizing agents can be included in amounts of 0.1 phr to 8.0 phr or 0.1 phr to 5.0 phr. The curing or vulcanizing agents can include, but are not limited to, elemental sulfur, a sulfur-containing silane, or a combination thereof.

In a further preferred aspect, the composition additionally comprises retarders in amounts of 1 phr to 10 phr. Retarders can include, but are not limited to, phthalic anhydrides, phthalimides (e.g., N-(cyclohexylthio)phthalimide), sulfenamide compounds, and acids (e.g., benzoic acid and salicylic acid).

In a preferred aspect, the filler comprises carbon black.

In a preferred aspect, the carbon black is an n-type carbon black. Examples of N-type carbon black include those with ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks can be characterized as having iodine absorptions, as determined according to ASTM D1510-21, ranging from 9 g/kg to 145 g/kg. These carbon blacks can also be characterized as having a dibutyl phthalate (DBP) absorption number, as determined according to ASTM D2414, ranging from 34 cm³/100 g to 150 cm³/100 g.

Antidegradants can include antioxidants and antiozonants. Representative antioxidants include, but are not limited to, phenylene diamine compounds (e.g., diphenyl-p-phenylenediamine), hydroquinoline compounds (e.g., 2,2,4-trimethyl-1,2-dihydroquinoline), amine compounds, dithiocarbamate compounds, phenolic compounds, phosphite compounds, toluimidazole compounds, and others, such as those disclosed in The Vanderbilt
Rubber Handbook (1978), Pages 344 through 346. Representative antiozonants include, but are not limited to, N-phenyl-N'-(1,3-dimethylbutyl)-p-phenylenediamine (6PPD) and N,N'-dixylene-p-phenylenediamine (DTPD).

The processing oil can be included in the composition as an extending oil typically used to extend elastomers. The processing oil can also be included in the elastomer composition by addition of the oil directly during rubber compounding. The processing oil used can include both an extending oil present in the elastomers and a process oil added during compounding. Suitable processing oils include, but are not limited to, various oils as are known in the art, including aromatic, paraffinic, naphthenic, vegetable oils, and low polycyclic aromatics (PCA) oils, such as MES, TDAE, SRAE, and heavy naphthenic oils. In one aspect, the low PCA oils can have a PCA content of less than 5% or less than 3% by weight. Suitable vegetable oils include, for example, soybean oil, sunflower oil, and canola oil which are in the form of esters containing a certain degree of unsaturation.

### C. PREPARATION AND APPLICATIONS OF RUBBER COMPOSITIONS

Rubber compositions can be compounded by methods generally known in the rubber compounding art. In one aspect, methods for compounding rubber can include mixing an elastomer, accelerator, and hydrogenated gum rosin together with, optionally, various vulcanizable constituent rubbers and with, optionally, various commonly used additive materials such as: fillers, waxes, antidegradants, fatty acids, processing oils, cure activators, and curing or vulcanizing agents.

More specifically, disclosed herein is a method for mixing rubber, the method comprising: combining together an elastomer and 0.1 phr to 10 phr of a hydrogenated gum rosin, thereby forming a first or initial mixture; mixing the first mixture at a temperature of 130 °C to 180 °C, thereby forming a first stage mixture; combining together the first stage mixture with 0.1 phr to 5 phr of a first accelerator and 0.1 phr to 5 phr a second accelerator, thereby forming an intermediate mixture; and mixing the intermediate mixture at a temperature of 90 °C to 110 °C, thereby forming a second stage mixture. In a preferred aspect, the initial mixture can be mixed at a temperature of 130 °C to 180 °C, 140 °C to 180 °C, 150 °C to 180 °C, 130 °C to 170 °C, 130 °C to 160 °C, or 140 °C to 170 °C. In another preferred aspect, the intermediate mixture can be mixed at a temperature of 90 °C to 110 °C, 100 °C to 110 °C, or 90 °C to 100 °C.

In a preferred aspect, the rubber composition is subjected to a thermomechanical mixing step. The mixing stages can comprise thermomechanical mixing, generally characterized by mechanical working in a mixer (e.g., internal batch mixer) or extruder for a period of time at an elevated temperature suitable to produce a rubber. The appropriate duration of the thermomechanical mixing varies as a function of the operating conditions and the volume and nature of the components. For example, the thermomechanical mixing may be from 0.5 to 10 minutes.

In a preferred aspect, forming the initial mixture further comprises combining together at least one of a filler, a wax, an antidegradant, a fatty acid, or a processing oil. The filler can be carbon black.

In a preferred, the filler is used in amounts of from 0.5 phr to 150 phr, 0.5 phr to 100 phr, 0.5 phr to 75 phr, 0.5 phr to 50 phr, or 0.5 phr to 25 phr. **In** another preferred aspect, the wax can be used in amounts of from 1 phr to 5 phr. In another preferred aspect, the antidegradant can be used in amounts of from 1 phr to 10 phr, 1 phr to 5 phr, or 5 phr to 10 phr. In another preferred aspect, the fatty acid can be used in amounts of from 0.5 phr to 3 phr. In another preferred aspect, the processing oil can be used in amounts of from 1 phr to 50 phr, 1 phr to 40 phr, 1 phr to 30 phr, or 1 phr to 20 phr. Examples of the various additives (e.g., filler, wax, etc.) include those previously listed.

In a further preferred aspect, forming the intermediate mixture further comprises combining together at least one of a retarder, a cure activator, or a curing agent to form the intermediate mixture. In another aspect, the retarder can be used in amounts of from 1 phr to 10 phr. In another aspect, the cure activator can be used in amounts of from 1 phr to 10 phr or 1 phr to 5 phr. In another aspect, the curing agent can be used in amounts of from 0.1 phr to 8.0 phr or 0.1 phr to 5.0 phr. Examples of the various additives (e.g., retarder, cure activator, etc.) include those previously listed.

### D. RUBBER ARTICLES

Also disclosed herein are articles that incorporate any of the compositions disclosed herein and/or are produced by any of the methods disclosed herein. In one aspect, the article comprises a tire, such as a pneumatic tire, or a component of a tire. The tire can be a race tire, passenger tire, aircraft tire, agricultural tire, off-the-road tire, truck or bus tire. The tire can also be a radial tire or bias tire. The component of the tire can be a tread, base, sidewall, apex, chafer, sidewall insert, wirecoat, innerliner, or any combination thereof.

In a preferred aspect, the component of the tire is a chafer, a sidewall, or any combination thereof.

Vulcanization of the disclosed tires or articles is generally carried out at conventional temperatures ranging from, for example, 100 °C to 200 °C or from 110 °C to 180 °C.

The articles have good ozone resistance. For example, the articles exhibit little to no cracking, splitting, and/or other defects after undergoing various methods of ozone testing. In one aspect, the articles can exhibit no cracking after dynamic ozone testing, wherein the dynamic ozone testing is performed following the method detailed in at least one of American Society for Testing and Materials (ASTM) method D1149 or German Institute for Standardization (DIN) method 53509. In another aspect, the articles can exhibit no cracking after static ozone testing, wherein the static ozone testing is performed following the method detailed in at least one of ASTM D1149 or DIN method 53509.

Without wishing to be bound by theory, it is believed that wax that has migrated to the surface of rubber articles (e.g., a tire sidewall or tire chafer) protects the article against ozone damage during static storage. However, wax migration can also cause visible wax blooming on surfaces of the articles, which can be seen as a negative by both users and sellers of the articles. The disclosed articles maintain good ozone resistance while reducing visible wax blooming compared to similar articles that do not contain a gum rosin.

### E. EMBODIMENTS

The following listing of exemplary embodiments supports the invention provided herein.

### Embodiment 1:

The synthetic elastomer comprises repeat units formed from residues of monomers selected from ethylene, propylene, isobutene, butadiene, isoprene, styrene, acrylonitrile, and a combination thereof, preferably residues of monomers selected from isobutene and isoprene.

### Embodiment 2:

The composition of embodiment 1, wherein the elastomer comprises from 40 phr to 60 phr of a natural rubber and from 40 phr to 60 phr of a synthetic elastomer.

### Embodiment 3:

The composition of embodiment 1 or embodiment 2, wherein the first accelerator is selected from a dithiocarbamate, a thiuram compound, a guanidine compound, and a combination thereof.

### Embodiment 4:

The composition of any one of the embodiments 1-3, wherein the first accelerator is selected from zinc diethyl dithiocarbamate; zinc N-dibutyl dithiocarbamate; zinc N-ethyl-N-phenyl dithiocarbamate; zinc dibenzyldithiocarbamate; tetrabenzylthiuram disulfide; diphenylguanidine; 1,3-di-o-tolylguanidine; triphenylguanidine; and a combination thereof.

### Embodiment 5:

The composition of any one of the embodiments 1-4, wherein the accelerator comprises from 0.1 phr to 3 phr of the first accelerator.

### Embodiment 6:

The composition of any one of the embodiments 1-5, wherein the second accelerator is selected from the group consisting of an amine, an imine, a sulfenamide, a guanidine, a dithiocarbamate, a thiadiazole, a thiazole, a thiourea, a thiuram, a dithiophosphate, a xanthate, and a combination thereof.

### Embodiment 7:

The composition of any one of the embodiments 1-6, wherein the second accelerator is selected from the group consisting of cyclohexylethylamine; hexamethylene tetramine; ethyldiene aniline; butyraldehyde dianiline condensate; N-cyclohexyl-2-benzothiazolesulfenamide; N-tertbutyl-2-benzothiazolesulfenamide; N,N-dicyclohexyl-2-benzothiazolesulfenamide; 2-(2-4'dinitrophenylmercapto)benzothiazole; 1,3-di-o-tolylguanidine; triphenylguanidine; Zinc diethyl dithiocarbamate; zinc N-dibutyl dithiocarbamate; zinc N-ethyl-N-phenyl dithiocarbamate; zinc dibenzyldithiocarbamate; N-cyclohexyl-S-(1,3,4-thiadiazol-2-yl)thiohydroxylamine; 2-mercaptobenzothiazole; 2,2'-dithiobenzothiazole; zinc 2-mercaptobenzothiazole; 2-(morpholinothio)benzothiazole; ethylenethiourea; N-N'- diphenylthiourea; tetramethylthiuram disulfide; tetraethylthiuram disulfide; tetramethylthiuram monosulfide; dipentamethylenethiuram tetrasulfide; zinc dithiophosphate; zinc butylxanthate; sodium isopropyl xanthate; and a combination thereof.

### Embodiment 8:

The composition of any one of the embodiments 1-7, wherein the accelerator comprises from 0.1 phr to 1 phr of the second accelerator.

### Embodiment 9:

The composition of any one of the embodiments 1-8, wherein the hydrogenated gum rosin has an acid value of 140 mg KOH/g to 180 mg KOH/g.

### Embodiment 10:

The composition of any one of the embodiments 1-9, wherein the hydrogenated gum rosin has a softening point of 70 °C to 100 °C.

### Embodiment 11:

The composition of any one of the embodiments 1-10, wherein the hydrogenated gum rosin is present in an amount of 0.1 phr to 5 phr.

### Embodiment 12:

The composition of any one of the embodiments 1-11, wherein the hydrogenated gum rosin is present in an amount of 0.1 phr to 3 phr.

### Embodiment 13:

The composition of any one of the embodiments 1-12, further comprising at least one wax.

### Embodiment 14:

The composition of any one of the embodiments 1-13, wherein the composition further comprises a filler, a wax, an antidegradant, a fatty acid, a processing oil, zinc oxide, a curing agent, or a combination thereof.

### Embodiment 15:

The composition of any one of the embodiments 1-14, wherein the composition comprises a filler, the filler comprising carbon black.

### Embodiment 16:

An article comprising the composition of any one of the embodiments 1-15.

### Embodiment 17:

The article of embodiments 16, wherein the article comprises a tire or a component of a tire.

### Embodiment 18:

The article of embodiment 16 or 17, wherein the component of the tire comprises a sidewall or a chafer.

### Embodiment 19:

The article of any one of the embodiments 16-18, wherein the article exhibits visually reduced wax blooming on a surface of the article compared to an equivalent article that does not comprise the hydrogenated gum rosin.

### Embodiment 20:

The article of any one of the embodiments 16-19, wherein the article exhibits no cracking after dynamic ozone testing, wherein the dynamic ozone testing is performed following the method detailed in at least one of ASTM D1149 or DIN 53509.

### Embodiment 21:

The article of any one of the embodiments 16-20, wherein the article exhibits no cracking after static ozone testing, wherein the static ozone testing is performed following the method detailed in ASTM D1149 or DIN 53509.

### Embodiment 22:

A method for mixing rubber, comprising: combining together an elastomer and 0.1 phr to 10 phr of a hydrogenated gum rosin, thereby forming an initial mixture; mixing the initial mixture at a temperature of 130 °C to 180 °C, thereby forming a first stage mixture; combining together the first stage mixture with 0.1 phr to 5 phr of a first accelerator and 0.1 phr to 5 phr a second accelerator, thereby forming an intermediate mixture; and mixing the intermediate mixture at a temperature of 90 °C to 110 °C, thereby forming a second stage mixture; wherein the elastomer comprises from 25 phr to 75 phr of a natural rubber and from 25 phr to 75 phr of a synthetic elastomer; and wherein the hydrogenated gum rosin has an acid value of 140 mg KOH/g to 200 mg KOH/g and a softening point of 70 °C to 125 °C.

### Embodiment 23:

The method of embodiment 22, wherein forming the initial mixture further comprises combining together at least one of a filler, a wax, an antidegradant, a fatty acid, or a processing oil.

### Embodiment 24:

The method of embodiment 23, wherein the filler comprises carbon black.

### Embodiment 25:

The method of any one of the embodiments 22-24, wherein forming the intermediate mixture further comprises combining together at least one of a retarder, a cure activator, or a curing agent to form the intermediate mixture.

### F. EXAMPLES

Unless indicated otherwise, parts are parts by weight, temperature is in °C or is at ambient temperature, and pressure is at or near atmospheric.

### 1. EVALUATION OF RUBBER COMPOSITIONS

Seven rubber compositions comprising a polybutadiene rubber and natural rubber-based matrix are provided in Table 1. Notable differences between the compositions include the presence of a gum rosin and the type of accelerators used.

**Table 1. Rubber composition with amounts shown in phr.**

| **Ingredient** | **Control** | **Experimental** | | | | | |
|---|---|---|---|---|---|---|---|
| | | **A** | **B** | **C** | **D** | **E** | **F** |
| polybutadiene rubber | 50 | 50 | 50 | 50 | 50 | 50 | 50 |
| natural rubber¹ | 50 | 50 | 50 | 50 | 50 | 50 | 50 |
| carbon black² | 25 | 25 | 25 | 25 | 25 | 25 | 25 |
| carbon black³ | 15 | 15 | 15 | 15 | 15 | 15 | 15 |
| resin⁴ | -- | -- | -- | -- | -- | 3 | -- |
| gum rosin | -- | 1 | 1 | 0.5 | 1.5 | 1 | 1 |
| isoparaffin wax | 2 | 2 | 2 | 2 | 2 | 2 | 2 |
| antidegradant⁵ | 0.5 | 0.5 | 0.5 | 0.5 | 0.5 | 0.5 | 0.5 |
| antidegradant⁶ | 1 | 1 | 1 | 1 | 1 | 1 | 1 |
| paraffin wax | 0.2 | 0.2 | 0.3 | 0.3 | 0.3 | 0.3 | 0.3 |
| antidegradant⁷ | 4.75 | 4.75 | 4.25 | 4.25 | 4.25 | 4.25 | 4.25 |
| processing oil⁸ | 13 | 13 | 13 | 13 | 13 | 13 | 13 |
| stearic acid | 1 | 1 | 1 | 1 | 1 | 1 | 1 |
| **NP1⁹ Total** | 162.45 | 163.45 | 163.05 | 162.55 | 163.55 | 166.05 | 163.05 |
| accelerator¹⁰ | -- | -- | -- | -- | -- | -- | 1 |
| zinc oxide | 3.5 | 3.5 | 3.5 | 3.5 | 3.5 | 3.5 | 3.5 |
| insoluble sulfur | 2.84 | 2.84 | 2.84 | 2.84 | 2.84 | 2.84 | 1.4 |
| accelerator¹¹ | 0.7 | 0.7 | 0.7 | 0.7 | 0.7 | 0.7 | 0.35 |
| accelerator¹² | -- | 0.3 | 0.3 | 0.15 | 0.5 | 0.3 | 0.3 |
| **Total phr** | 169.49 | 170.79 | 170.39 | 169.74 | 171.09 | 173.39 | 169.6 |
| **Specific Gravity** | 1.075 | 1.075 | 1.075 | 1.075 | 1.075 | 1.075 | 1.073 |

| | | | | | | | |
|---|---|---|---|---|---|---|---|
| ¹ TSR grade ² N550 ³ N220 ⁴ phenol formaldehyde ⁵ mixed aryl-p-phenylenediamines ⁶ 2,2,4-trimethyl-1,2-dihydroquinoline ⁷ N-phenyl-N'-(1,3-dimethylbutyl)-p-phenylenediamine ⁸ treated distillate aromatic extract oil with low polycyclic aromatic content ⁹ nonproductive mixture 1 ¹⁰ tetrabenzylthiuram disulfide ¹¹ N-cyclohexyl benzothiazol-2-sulfenamide 12 diphenylguanidine | | | | | | | |

Dynamic and static ozone resistance tests were performed on sidewall rubber specimens formed from the compositions listed in Table 1.

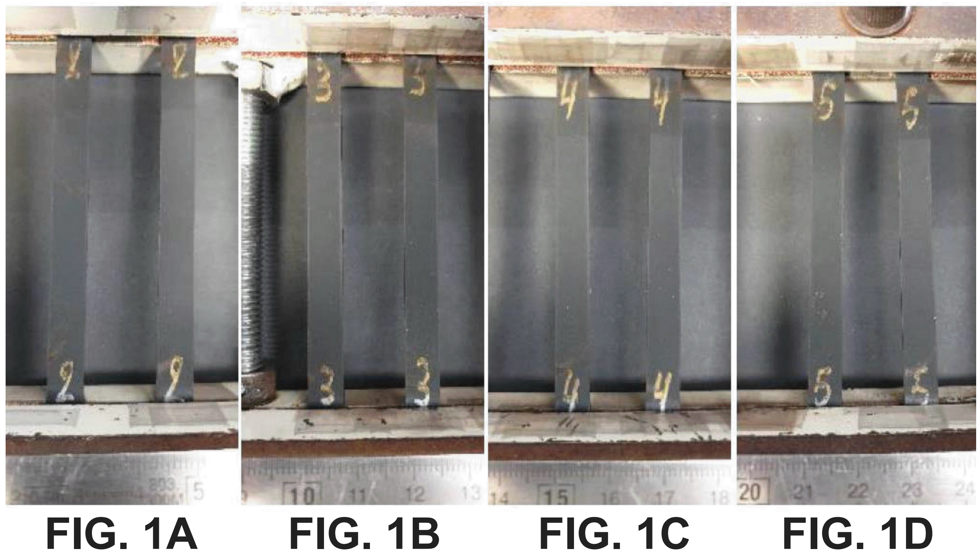

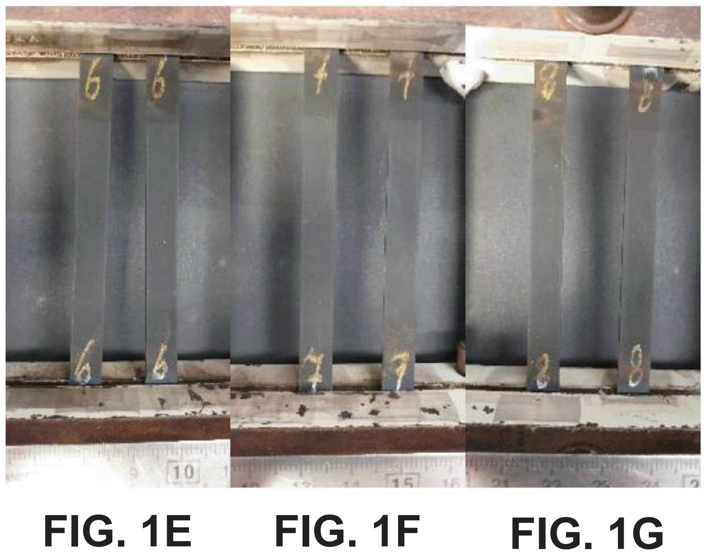

FIGS. 1A-1G show pictures of sidewall rubber specimens after undergoing dynamic ozone resistance testing in accordance with testing methods such as ASTM D1149 and DIN 53509. The sidewall rubber specimen of FIG. 1A corresponds to the Control composition, while the sidewall rubber specimens of FIGS. 1B-1G correspond to the Experimental compositions, specifically Expermintal A (FIG. 1B), Expermintal B (FIG. 1C), Expermintal C (FIG. 1D), Expermintal D (FIG. 1E), Expermintal E (FIG. 1F), and Expermintal F (FIG. 1G).

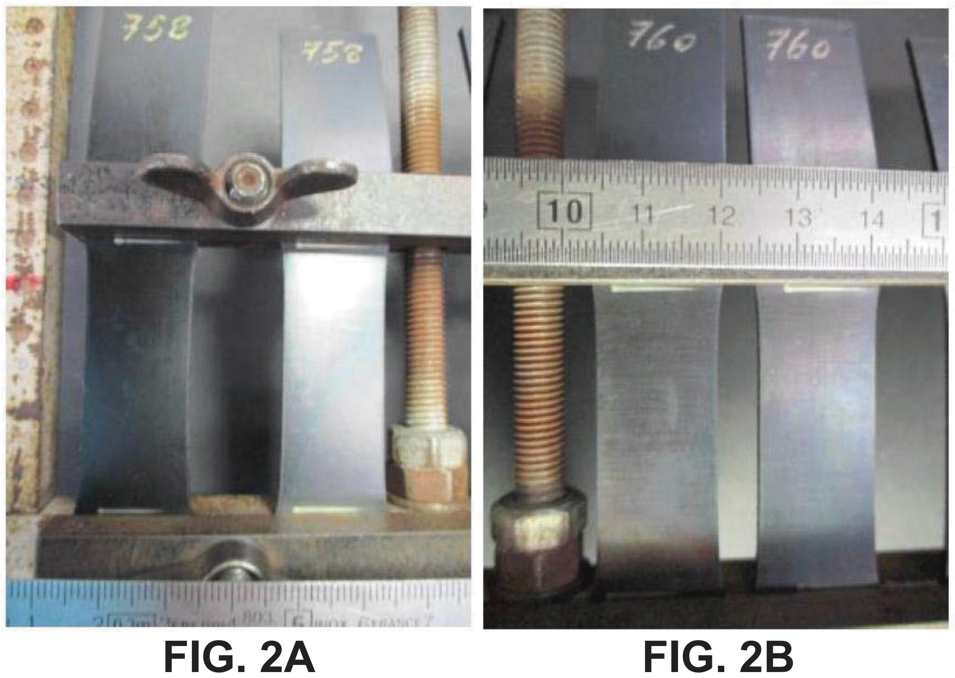

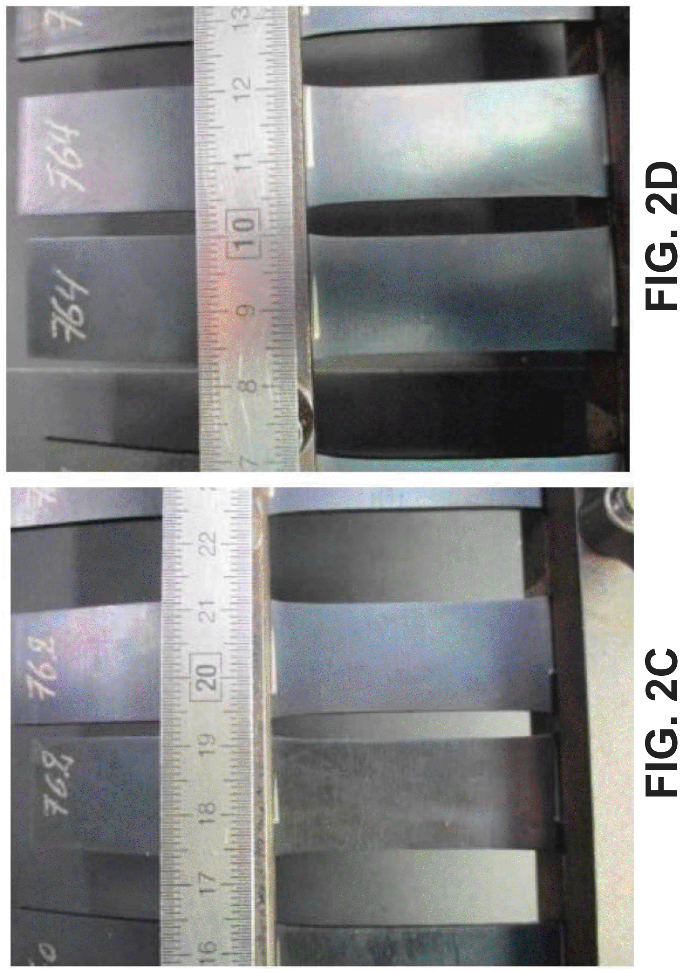

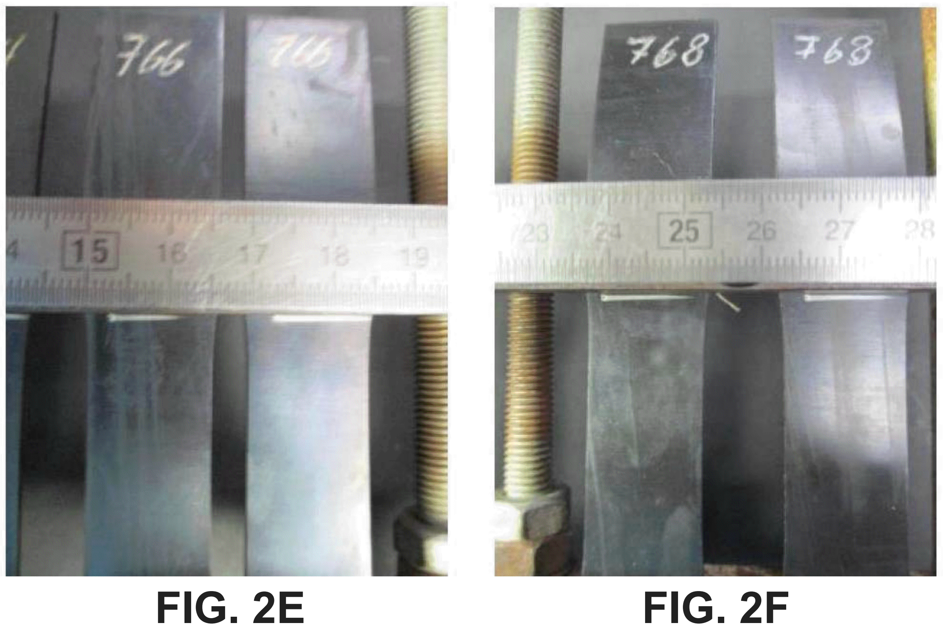

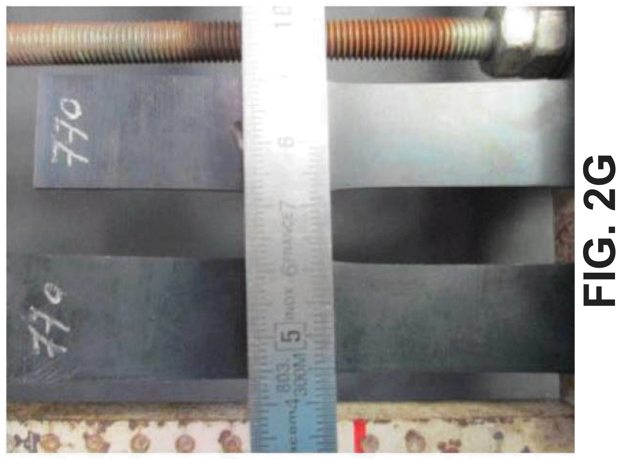

FIGS. 2A-2G show pictures of sidewall rubber specimens after undergoing static ozone resistance testing in accordance with testing methods such as ASTM D1149 and DIN 53509. The sidewall rubber specimen of FIG. 2A corresponds to the Control composition, while the sidewall rubber specimens of FIGS. 2B-2G correspond to the Experimental compositions, specifically Expermintal A (FIG. 2B), Expermintal B (FIG. 2C), Expermintal C (FIG. 2D), Expermintal D (FIG. 2E), Expermintal E (FIG. 2F), and Expermintal F (FIG. 2G). For both dynamic and static ozone testing, the rubber specimens had an ozone resistance rating of Grade 0, meaning no cracks, splits, or other defects were observed on the rubber specimens. This indicates that all of the rubber specimens had good ozone resistance.

Briefly, the dynamic ozone testing and static ozone testing was performed in accordance with ASTM D1149 or DIN 53509. Rubber specimens are prepared from vulcanized rubber compositions. The rubber specimens tested were rectangular strips with dimensions of 65mm×10mm×2mm for the dynamic ozone testing and 254mm×150mm×2mm for the static ozone testing. The specimens are exposed to a known, controlled concentration of ozone in a chamber for 12 hours (dynamic ozone testing) or 24 hours (static ozone testing) at a temperature of 38 °C. In this Example, the ozone concentration was 50pphm. For dynamic ozone testing, the samples were tested under these conditions at a relative humidity of 60% while applying a dynamic maximum amplitude tensile strain of 0% to 25% elongation at a fixed frequency of 0.5 Hz. For static ozone testing, the samples were tested under these conditions at a relative humidity of 40% while applying a constant tensile strain of 20% elongation.

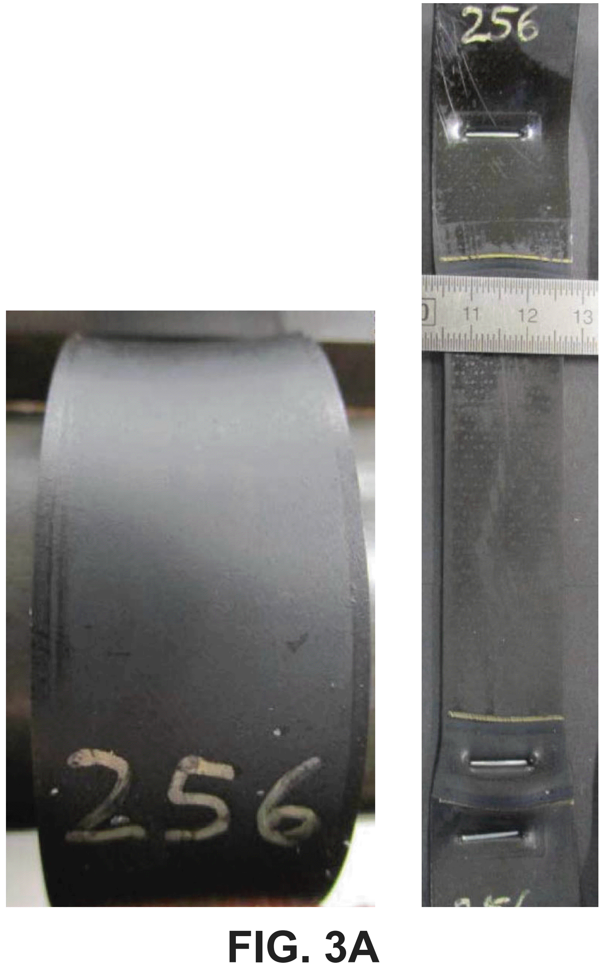

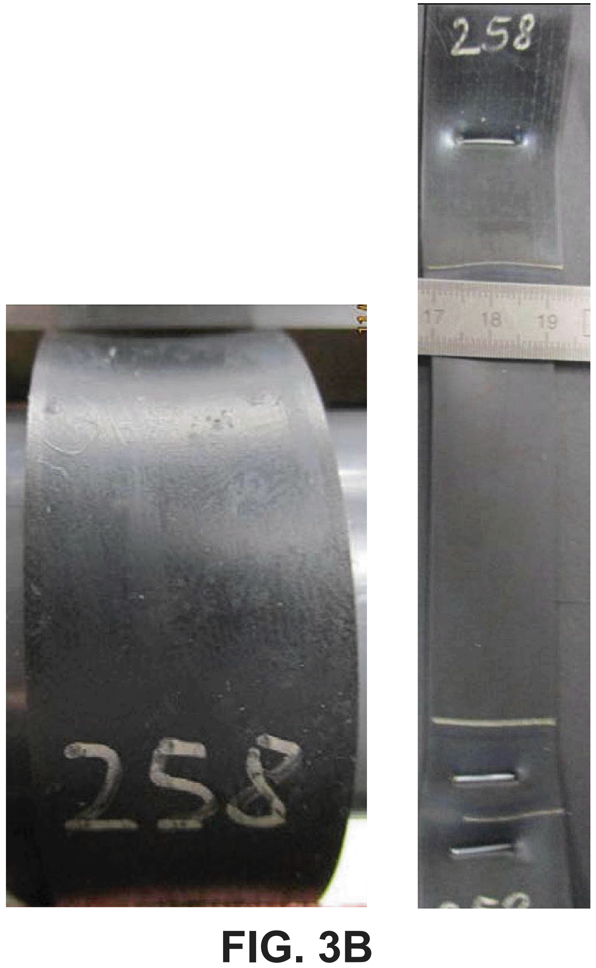

FIGS. 3A-3B show pictures of sidewall rubber specimens that have undergone flex static ozone resistance testing, where the specimen of FIG. 3A does not contain a gum rosin or diphenylguanidine and the specimen of FIG. 3B contains both a gum rosin or diphenylguanidine. The sidewall rubber specimen of FIG. 3A corresponds to the Control composition and the sidewall rubber specimen of FIG. 3B corresponds to composition Experimental A. Both rubber specimens show no stress marks following flex static ozone testing. However, the specimen that included gum rosin and diphenylguanidine shows significantly less visible wax blooming than the other specimen. Without wishing to be bound by theory, it is believed that wax migrating at the surface of a tire sidewall and/or chafer protects the tire against ozone during static storage. However, this wax migration or excess wax migration can also result in visible wax blooming on the surface of the tire, which can be seen as a negative by both those who sell and purchase tires. These compositions maintain ozone resistance while reducing visible wax blooming.

Briefly, for the flex static ozone testing, rubber specimens are prepared from vulcanized rubber compositions. The rubber specimens tested were rectangular strips with dimensions of 150mm×20mm×6mm. The specimens are exposed to a known, controlled concentration of ozone (200 pphm) in a chamber for 46 hours at a temperature of 25 °C and a relative humidity of 60%. In this Example, the ozone concentration was 50pphm. The samples were tested under these conditions while applying a continuous tensile strain of 7% elongation.

## Claims

1. A composition comprising:
an elastomer, the elastomer comprising from 25 phr to 75 phr of a natural rubber and from 25 phr to 75 phr of a synthetic elastomer;
an accelerator, comprising from 0.1 phr to 5 phr of a first accelerator and 0.1 phr to 5 phr a second accelerator, the second accelerator being different from the first accelerator; and
from 0.1 phr to 10 phr of a hydrogenated gum rosin;
wherein the hydrogenated gum rosin has an acid value of 140 mg KOH/g to 200 mg KOH/g and a softening point as determined in accordance with ASTM E28 in a range of from 70 °C to 125 °C.

2. The composition of claim 1, wherein the synthetic elastomer comprises repeat units formed from residues of monomers selected from ethylene, propylene, isobutene, butadiene, isoprene, styrene, acrylonitrile, and a combination thereof.

3. The composition of claim 1 or 2, wherein the first accelerator is selected from a dithiocarbamate, a thiuram compound, a guanidine compound, and a combination thereof; and/or wherein the second accelerator is selected from the group consisting of an amine, an imine, a sulfenamide, a guanidine, a dithiocarbamate, a thiadiazole, a thiazole, a thiourea, a thiuram, a dithiophosphate, a xanthate, and a combination thereof.

4. The composition of at least one of the previous claims, wherein the first accelerator is selected from zinc diethyl dithiocarbamate; zinc N-dibutyl dithiocarbamate; zinc N-ethyl-N-phenyl dithiocarbamate; zinc dibenzyldithiocarbamate; tetrabenzylthiuram disulfide; diphenylguanidine; 1,3-di-o-tolylguanidine; triphenylguanidine; and a combination thereof; and/or wherein the second accelerator is selected from the group consisting of cyclohexylethylamine; hexamethylene tetramine; ethyldiene aniline; butyraldehyde dianiline condensate; N-cyclohexyl-2-benzothiazolesulfenamide; N-tertbutyl-2-benzothiazolesulfenamide; N,N-dicyclohexyl-2-benzothiazolesulfenamide; 2-(2-4'dinitrophenylmercapto)benzothiazole; 1,3-di-o-tolylguanidine; triphenylguanidine; Zinc diethyl dithiocarbamate; zinc N-dibutyl dithiocarbamate; zinc N-ethyl-N-phenyl dithiocarbamate; zinc dibenzyldithiocarbamate; N-cyclohexyl-S-(1,3,4-thiadiazol-2-yl)thiohydroxylamine; 2-mercaptobenzothiazole; 2,2'-dithiobenzothiazole; zinc 2-mercaptobenzothiazole; 2-(morpholinothio)benzothiazole; ethylenethiourea; N-N'-diphenylthiourea; tetramethylthiuram disulfide; tetraethylthiuram disulfide; tetramethylthiuram monosulfide; dipentamethylenethiuram tetrasulfide; zinc dithiophosphate; zinc butylxanthate; sodium isopropyl xanthate; and a combination thereof.

5. The composition of at least one of the previous claims, wherein the hydrogenated gum rosin has an acid value of from 140 mg KOH/g to 180 mg KOH/g.

6. The composition of at least one of the previous claims, wherein the hydrogenated gum rosin has a softening point as determined in accordance with ASTM E28 of from 70 °C to 100 °C.

7. The composition of at least one of the previous claims, wherein the composition further comprises a filler, preferably a filler comprising carbon black.

8. The composition of at least one of the previous claims, wherein the composition comprises a wax, an antidegradant, a fatty acid, a processing oil, zinc oxide, a curing agent, or a combination thereof.

9. An article comprising the composition of at least one of the previous claims.

10. The article of claim 9, wherein the article is a tire or a component of a tire, preferably a tire sidewall or a tire chafer.

11. The article of at least one of the previous claims 9 or 10, wherein the article exhibits visually reduced wax blooming on a surface of the article compared to an equivalent article that does not comprise the hydrogenated gum rosin.

12. The article of at least one of the previous claims 9 to 11, wherein the article exhibits no cracking after dynamic ozone testing, wherein the dynamic ozone testing is performed following the method detailed in at least one of ASTM D1149 or DIN 53509; and/or wherein the article exhibits no cracking after static ozone testing, wherein the static ozone testing is performed following the method detailed in ASTM D1149 or DIN 53509.

13. A method of mixing a rubber composition, the method comprising:
combining together an elastomer and 0.1 phr to 10 phr of a hydrogenated gum rosin, thereby forming an first mixture;
mixing the first mixture at a temperature of 130 °C to 180 °C, thereby forming a first stage mixture;
combining together the first stage mixture with 0.1 phr to 5 phr of a first accelerator and 0.1 phr to 5 phr a second accelerator, the second accelerator being different from the first accelerator, thereby forming an intermediate mixture; and
mixing the intermediate mixture at a temperature of 90 °C to 110 °C, thereby forming a second stage mixture;
wherein the elastomer comprises from 25 phr to 75 phr of a natural rubber and from 25 phr to 75 phr of a synthetic elastomer; and
wherein the hydrogenated gum rosin has an acid value of 140 mg KOH/g to 200 mg KOH/g and a softening point of 70 °C to 125 °C as determined in accordance with ASTM E28.

14. The method of claim 13, wherein forming the first mixture further comprises combining together at least one of a filler, preferably a filler comprising carbon black, a wax, an antidegradant, a fatty acid, or a processing oil.

15. The method of claim 13 or 14, wherein forming the intermediate mixture further comprises combining together at least one of a retarder, a cure activator, or a curing agent to form the intermediate mixture.
